# FASCICULE DE BREVET EUROPEEN

(11) **EP 3 473 378 B1**
(45) Date de publication et mention de la délivrance du brevet: **20.04.2022**
(21) Numéro de dépôt: 18201607.1
(22) Date de dépôt: 19.10.2018
(51) Int. Cl.: B23Q 16/00, B23Q 16/06, B23Q 1/66

(54) **SYSTÈME DE POSITIONNEMENT ADAPTÉ À UN FONCTIONNEMENT À BASSES TEMPERATURES**
POSITIONIERSYSTEM, DAS AN EINEN NIEDRIGTEMPERATURBETRIEB ANGEPASST IST
POSITIONING SYSTEM ADAPTED TO OPERATION AT LOW TEMPERATURES

(30) Priorité: 20.10.2017 FR 1759928
(43) Date de publication de la demande: 24.04.2019
(73) Titulaire: Commissariat à l'énergie atomique et aux énergies alternatives, 75015 Paris (FR)
(72) Inventeur: BARRIERE, Jean-Christophe, 78180 MONTIGNY LE BRETONNEUX (FR)
(74) Mandataire: Brevalex

(56) Documents cités:
- GB-A- 1 374 669
- US-A- 2 965 208
- US-A1- 2002 027 221
- US-A1- 2004 107 805

## Description

### DOMAINE TECHNIQUE ET ÉTAT DE LA TECHNIQUE ANTÉRIEURE

La présente invention se rapporte à un système de positionnement, pouvant notamment être utilisé dans des milieux à très basses températures, voire à des températures cryogéniques, et éventuellement à très basses pressions, voire le vide.

Par exemple dans le domaine spatial, on souhaite disposer de systèmes de positionnement, par exemple en rotation, offrant une très grande répétabilité du positionnement et fonctionnant dans des conditions de vide et à des températures très basses, par exemple pour équiper les télescopes effectuant des mesures dans le domaine de l'infra-rouge ou pour les télescopes spatiaux.

Il existe de nombreux systèmes de positionnement en rotation pour des applications de laboratoire. De nombreux systèmes industriels présentent une très bonne répétabilité de positionnement de quelques secondes d'arc et sont fréquemment utilisés pour des bancs de tests optiques.

Cependant, lorsqu'il s'agit d'utiliser ces systèmes dans des ambiances basses températures, inférieures à -20°C, voire des températures cryogéniques, inférieures à -100°C, ces systèmes ne fonctionnent plus du fait de procédés de fabrication ou de fonctionnement inadaptés au vide et aux très basses températures.

Le document Cryomechanism: a cryogenic rotating actuator. JC Barriere et al. Proceedings of ESMATS, Bilbao, 2015 décrit un actionneur rotatif adapté à un fonctionnement dans une ambiance cryogénique. Il est destiné à positionner une roue optique. L'actionneur comporte un moteur électrique pas à pas, un embrayage destiné à verrouiller dans une position angulaire donnée la roue optique. Lorsque l'embrayage est déverrouillé, le moteur déplace la roue optique à la position angulaire souhaitée. L'embrayage est ensuite verrouillé, fixant la position angulaire de la roue optique à laquelle le moteur l'a positionnée.

Le document US2004/0107805 décrit une machine d'indexage en position mettant en œuvre une courroie crantée, ce qui la rend inadaptée à un fonctionnement à très basses températures par exemple -250°C. En effet, sous l'effet des très basses températures la longueur de la courroie va diminuer et sa tension va augmenter, ce qui rendra le dispositif inutilisable. En outre, la courroie va également se raidir et risque de casser rapidement.

Le document US2 965 208 décrit également une machine d'indexage en position utilisant une courroie crantée, ce qui la rend également inadaptée à un fonctionnement à très basses températures pour les raisons énoncées ci-dessus. En outre, elle met en œuvre un vérin pneumatique dont le fonctionnement est incompatible à la fois avec un fonctionnement à très basses températures, et avec un fonctionnement avec le vide.

Le document GB1 374 669 décrit une machine pour déplacer une pièce vers différentes stations de travail mettant en œuvre un piston hydraulique dont le fonctionnement est incompatible avec un fonctionnement à très basses températures.

Le document Cryomechanism: a cryogenic rotating actuator. JC Barriere et al. Proceedings of ESMATS, Bilbao, 2015 décrit un actionneur rotatif adapté à un fonctionnement dans une ambiance cryogénique. Il est destiné à positionner une roue optique. L'actionneur comporte un moteur électrique pas à pas, un embrayage destiné à verrouiller dans une position angulaire donnée la roue optique. Lorsque l'embrayage est déverrouillé, le moteur déplace la roue optique à la position angulaire souhaitée. L'embrayage est ensuite verrouillé, fixant la position angulaire de la roue optique à laquelle le moteur l'a positionnée.

Cet actionneur donne satisfaction. Néanmoins il met en œuvre un moteur pas à pas de type pancake présentant un grand diamètre par rapport à sa hauteur et un arbre creux. Ces moteurs sont encombrants. En outre la résolution angulaire du dispositif est limitée. De plus ces moteurs sont assez rares et sont d'un coût important.

Le document US 2004 107805 concerne un système de positionnement comprenant un moteur à commande électrique connecté à la surface de positionnement par l'intermédiaire d'un entraînement à courroie crantée/pignon.

Il existe également des systèmes de positionnement mettant en œuvre un moteur pas à pas et un réducteur. En choisissant un rapport de réduction assez élevé, on peut atteindre de très bonnes performances de positionnement. Le réducteur est sans jeu ou dispose d'un système de rattrapage de jeu, afin de garantir la précision de positionnement. Cependant un tel système est peu adapté à un fonctionnement à très basses températures du fait du montage sans jeu.

### EXPOSÉ DE L'INVENTION

C'est par conséquent un but de la présente invention d'offrir un système de positionnement capable de fonctionner dans une large gamme de température, par exemple de -250°C à +70°C, et présentant une précision de positionnement augmentée.

Le but précédemment énoncé est atteint par un système de positionnement comportant une platine, de laquelle est destiné à être solidaire l'objet à positionner, un moteur destiné à déplacer la platine, un système d'indexage configuré pour fixer en position la platine et un réducteur entre le moteur et la platine, le réducteur présentant un jeu. Le système d'indexage est désactivé lorsque le moteur est actionné.

Ainsi le système de positionnement assure à la fois un déplacement de la platine vers une position donnée avec une précision augmentée, tout en assurant un maintien précis de cette position. La mise en œuvre d'un réducteur permet d'augmenter le nombre de positions atteignables par la platine et donc par l'objet à positionner. La présence d'un jeu angulaire dans le réducteur assure un découplage du moteur lorsque des moyens d'indexage sont activés, assurant qu'aucune contre-réaction ne s'applique sur le moteur via le réducteur lorsque les moyens d'indexage sont activés. En outre, la présence de ce jeu rend la mise en œuvre d'un réducteur possible à très basses températures sans avoir à calculer les contraintes s'exerçant sur les dents, contrairement à ce qu'impose la mise en œuvre d'un réducteur sans jeu sous vide et à basse température dans le système de l'état de la technique.

De manière surprenante, la mise en œuvre d'un réducteur présentant un jeu ne nuit pas à la précision de positionnement du système de positionnement, alors que de manière habituelle afin d'augmenter la précision on cherche à mettre en œuvre des dispositifs sans jeu, la présence d'un jeu étant considéré comme impactant directement de manière négative les performances de positionnement.

Le système selon l'invention offre en outre une rapidité accrue par rapport aux systèmes de positionnement avec réducteur de l'état de la technique.

De manière avantageuse, le système d'indexage est du type accouplement à crabot. De manière très avantageuse, le crabot met en œuvre des dentures de Hirth.

La désactivation des moyens d'indexage peut être obtenue au moyen d'un électroaimant, et l'activation des moyens d'indexage est obtenue par des moyens de rappel élastique, très avantageusement formé par un soufflet à coupelles métalliques soudées.

Par ailleurs, le système de l'invention permet également d'optimiser les coûts de production. En effet, la présente invention utilise des moteurs pas à pas de conception classique, i.e. ayant un diamètre inférieur ou égal à leur propre hauteur, avec un arbre plein... leur coût de revient est réduit par rapport aux moteurs de type « pancake ». En outre la mise en œuvre d'un moteur pas à pas permet de connaître la position du moteur sans mettre en œuvre de capteur de position supplémentaire.

En d'autres termes, le système comporte un stator et une partie mobile à positionner, la partie mobile étant déplacée dans une position souhaitée par un moteur et un réducteur avec jeu et est maintenue dans cette position par un système d'indexage. Ainsi selon l'invention, le moteur est activé pour positionner la partie mobile, le système d'indexage est inactif et ne nuit pas au fonctionnement du moteur. Lorsque l'objet a été placé dans la position souhaitée, le système d'indexage est activé, et se positionne en parallèle du moteur, et se substitue à celui-ci. Le système d'indexage se positionne ainsi en aval du stator et en amont de la partie mobile. En se substituant à la branche moteur+réducteur, il garantit les performances de positionnement indépendamment des performances de positionnement de l'ensemble moteur+réducteur, ainsi le jeu dans le réducteur ne nuit pas au maintien précis de la partie mobile. Le jeu fonctionnel du réducteur permet de découpler artificiellement la partie mobile du moteur. Le positionnement final de la partie mobile est alors assuré par le système d'indexage qui assure un positionnement discret.

Le système de positionnement selon l'invention permet un positionnement discret d'un objet par rapport à un support. Par exemple, il comporte un premier élément relié au support par des premiers moyens de guidage et est apte à être relié mécaniquement à un objet à déplacer, le déplacement dudit premier élément étant commandé par un moteur. Le système comporte également un deuxième élément mobile relié audit support par des deuxièmes moyens de guidage et apte à se déplacer entre une position de repos, dans laquelle il bloque le premier élément mobile, et une position active dans laquelle il laisse libre ledit premier élément mobile, le déplacement de ce deuxième élément mobile étant assuré par des moyens de commande, par exemple magnétiques, tels que un ou des électroaimants, électriques, piézoélectriques. Un réducteur avec jeu est prévu ente entre le moteur et le premier élément mobile, le jeu permettant d'empêcher une contreréaction entre le système d'indexage et le moteur.

La présente invention a alors pour objet un système de positionnement comportant un bâti et une platine, ladite platine étant montée mobile par rapport au bâti, ladite platine étant apte à supporter un objet à positionner, des moyens de déplacement de la platine par rapport au bâti vers une position souhaitée, et un système d'indexage en position de la platine par rapport au bâti, les moyens de déplacement comportant un moteur pas à pas et un réducteur, ledit réducteur présentant un jeu angulaire et le système d'indexage comportant des moyens pour rendre inactif l'indexage en position de ladite platine pendant le fonctionnement des moyens de déplacement.

Le jeu angulaire du réducteur est supérieur à la résolution angulaire à l'ensemble moteur et réducteur. Le jeu angulaire du réducteur est par exemple supérieur à 0,2°.

Dans un exemple de réalisation, les moyens d'indexage en position comportent des moyens d'accouplement à crabot répartis entre la platine et un plateau, ledit plateau étant configuré pour se rapprocher et s'éloigner de la platine afin d'immobiliser en position ou libérer la platine respectivement, et des moyens assurant le déplacement en rapprochement ou en éloignement du plateau par rapport à la platine..

De manière avantageuse, les moyens d'accouplement à crabot comportent des dentures de Hirth. Par exemple, les dentures de Hirth sont réalisées chacune dans un matériau, les matériaux présentant des coefficients de dilatation proches ou égaux.

Dans un exemple avantageux, les moyens assurant le déplacement en rapprochement ou en éloignement du plateau par rapport à la platine comportent un moyen de rappel élastique interposé ente le plateau et le bâti de sorte à exercer une force de rappel sur le plateau en direction de la platine.

De manière préférée, le moyen de rappel élastique comporte un soufflet à coupelles métalliques soudées assurant le rapprochement du plateau de la platine.

Les moyens assurant le déplacement en rapprochement ou en éloignement du plateau par rapport à la platine comportent un électroaimant assurant l'éloignement du plateau par rapport à la platine.

Par exemple, tout ou partie des éléments du réducteur, de la platine, du plateau et des moyens d'accouplement sont en acier inoxydable et/ou en acier et/ou en bronze et/ou en alliage à base de cuivre et/ou d'aluminium et ou de titane.

De manière très avantageuse, au moins les éléments mobiles les uns par rapport aux autres comportent un revêtement lubrifiant choisi avantageusement parmi du bisulfure de molybdène, du plomb, de l'argent, du nitrure de titane.

Le réducteur peut comporter des pignons à denture droite.

Dans un exemple de réalisation, la platine est mobile en rotation par rapport au châssis autour d'un axe longitudinal.

Le réducteur peut comporter un pignon en prise directe avec un arbre du moteur, une couronne dentée fixée sur la platine et engrenant le pignon et le plateau des moyens d'indexage en position peut être mobile en translation le long de l'axe longitudinal.

### BRÈVE DESCRIPTION DES DESSINS

La présente invention sera mieux comprise sur la base de la description qui va suivre et des dessins en annexe sur lesquels:
- la figure 1 est une représentation schématique d'une vue en coupe d'un système de positionnement selon un exemple de la présente invention, dans un état repos, i.e. en position stable et répétable
- la figure 2 est une vue en coupe du système de la figure 1 en position active, i.e. en cours de déplacement,
- la figure 3 est une représentation d'un système d'accouplement à dents de Hirth,
- la figure 4 est une représentation schématique d'un autre exemple de système d'indexage pouvant être mis en œuvre dans le système selon l'invention,
- la figure 5 est une vue de côté d'un autre exemple de réalisation d'un réducteur pouvant être mise en œuvre dans le système de positionnement selon l'invention.

### EXPOSÉ DÉTAILLÉ DE MODES DE RÉALISATION PARTICULIERS

La description qui va suivre décrit en détail un système de positionnement angulaire, mais la présente invention peut être mise en œuvre dans un système de positionnement axial ou linéaire.

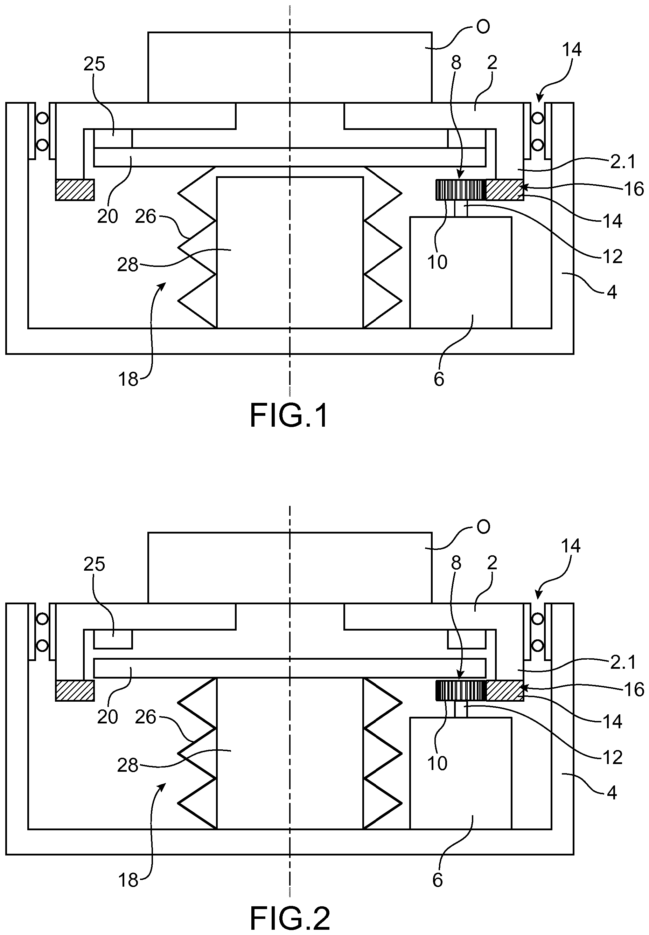

Sur les figures 1 et 2, on peut voir des vues dans un état repos et un état activé d'un exemple d'un système de positionnement, représenté schématiquement.

Le système de positionnement est destiné à positionner angulairement un objet O fixé sur une platine 2 du système. La platine 2 est destinée à être mise en rotation autour d'une axe X.

Le système comporte des éléments fixes et des éléments destinés à être déplacés, dont fait partie la platine 2.

Les éléments fixes sont fixés sur un bâti 4 et les éléments destinés à être déplacés sont déplacés par rapport au bâti 4.

Le système comporte un moteur électrique rotatif pas à pas 6, un réducteur 8 entre le moteur 6 et la platine 2. Le réducteur 8 présente un jeu j, supérieur à 0,1° pour l'exemple donné ; comme nous le verrons pas la suite, le jeu du réducteur est défini par l'amplitude angulaire avec laquelle la platine 2 peut tourner alors que le moteur 6 est immobile.

A titre d'exemple, le moteur est un moteur de modèle Phytron VSS 32.200.0.6^{®}. Ce moteur pas à pas présente l'avantage d'être compatible avec une utilisation jusqu'à une pression de 10⁻⁹mbar et à température jusqu'à 4K. Par exemple, ce moteur pas à pas possède 200 pas par tour et dispense un couple de 50mN.m à 0,6A.

Le système comporte des moyens de guidage 14 en rotation de la platine 2 autour de l'axe X. Les moyens de guidage 14 sont, dans l'exemple représenté, formés par une paire de roulements à billes. De préférence, les roulements à billes sont à contact oblique, montés en « O ».

Dans l'exemple représenté, les roulements à billes sont maintenus sur leur diamètre extérieur par le bâti, et sur leur diamètre intérieur, par la platine 2.

De préférence, le matériau du bâti, le matériau de la platine et des roulements sont choisis de sorte à garantir le maintien des jeux fonctionnels entre la température ambiante, à laquelle le système est assemblé, et les températures cryogéniques auxquelles le système est susceptible de fonctionner.

Pour cela, on choisit des matériaux pour le bâti et la platine ayant des coefficients de dilatations proches ou égaux de celui du matériau des roulements à billes.

De préférence, pour une application cryogénique, on choisit des roulements adaptés, par exemple en acier inoxydable 440C ou en acier 52100 revêtus d'une couche de bisulfure de molybdène. Une telle couche peut être déposée par dépôt physique en phase vapeur ou PVD (Physical vapor deposition en terminologie anglo-saxonne). Avantageusement, une couche de bisulfure de molybdène est déposée à la fois sur les pistes et sur les billes, ce qui permet d'augmenter la durée de vie des roulements. Les cages des roulements à bille peuvent être réalisées en PTFE renforcé par de la fibre de verre et chargé en bisulfure de molybdène ou PGM-HT (PTFE, Glass fiber & Molybdenum Disulphide en terminologie anglo-saxonne).

En variante, des revêtements au plomb, au carbure de titane, à l'argent, à l'or peuvent être utilisés comme lubrifiants entre les différentes pièces du système. Ces revêtements sont appliqués en couches très fines (quelques microns) sur des pièces en acier.

Le choix du matériau assurant la lubrification est fonction des conditions d'utilisations, par exemple en tenant compte des conditions au niveau des contacts entre les pièces qui frottent entre elles. Peuvent être pris en compte les pressions de contact, le fait d'avoir des chocs ou pas, la durée de vie attendue, les vitesses de déplacement d'une pièce par rapport à l'autre...

Dans le cas d'une application à des températures supérieures à -50°C, on peut utiliser une huile ou une graisse comme lubrifiant.

En variante, selon les chargements axiaux ou radiaux, des roulements à 4 points de contact ou des roulements à rouleaux cylindriques peuvent aussi convenir.

Par exemple, si les roulements sont en acier inoxydable 440C, le bâti et la platine peuvent être en acier inoxydable 15-5PH, en 17-7PH ou en 431 avec un traitement thermique H1025, dont les caractéristiques mécaniques permettent l'usinage de pièce de précision et garantit un coefficient de dilatation très proche de celui du 440C.

Un traitement thermique H1025 signifie un traitement thermique au-dessus de 1025°F (Hardened above 1025°F).

Ci-dessous sont données les désignations des différents matériaux dans les normes UNS et européennes.
440C= UNS-S44004= EN 1.4125
15-5Ph= UNS-S15500=EN1.4545
17-7Ph=UNS-S17700=EN1.4568
431=UNS-S43100=EN1.4057
52100=UNS52986=EN1.3514

Le réducteur 8 comporte un pignon 10 en prise directe avec l'arbre 12 du moteur 6, et un pignon intérieur 14 engrenant le pignon 12 fixé à la platine 2.

Dans l'exemple représenté, la platine comporte une couronne 2.1 d'axe X, à laquelle est fixée une couronne 16 portant le pignon intérieur. La couronne 16 est d'axe X.

Par exemple, le pignon 10 et le pignon intérieur 14 sont à denture droite.

A titre d'exemple, on peut choisir un pignon droit de module 0,4 à 15 dents et un pignon à denture intérieure de module 0,4 à 200 dents. Le réducteur présente alors un rapport de réduction d'environ 1/13,3.

Ainsi réalisé, l'ensemble moteur et réducteur permet théoriquement de positionner la platine suivant 2666 positions angulaires différentes par tour, soit une résolution angulaire de 0,13°. Dans cet exemple, le couple utile sur le rotor est de l'ordre de 500 mN.m.

De préférence, le choix du nombre de dents sur le pignon 10 et du pignon intérieur 14, ainsi que leur module sont tels que le rapport de réduction soit entre 1/10 et 1/20. De manière avantageuse, avec un réducteur ayant un rapport de réduction entre 1/10 et 1/20, la vitesse de positionnement de la platine est élevée, en quelques secondes la platine peut atteindre la position souhaitée. Le choix du rapport de réduction dépend du couple du moteur et du couple de sortie souhaitée, et de la vitesse d'actionnement du dispositif souhaitée.

Dans cet exemple, le jeu angulaire du réducteur est d'environ 0,2°.

Le jeu du réducteur est supérieur à la résolution angulaire de l'ensemble moteur et réducteur.

De préférence, les dentures des pignons 10, 14 du réducteur sont recouvertes d'une couche de bisulfure de molybdène, améliorant un fonctionnement à la fois à température ambiante et aux températures cryogéniques.

De préférence, le matériau du pignon intérieur est choisi de sorte à présenter un coefficient de dilatation thermique identique à celui de la platine.

Par exemple, lorsque la platine est en acier 15-5PH, le pignon intérieur est réalisé en acier 17-7PH avec le traitement thermique H1025, ce matériau possédant une dureté suffisante pour y tailler les dentures d'un engrenage et possède un coefficient de dilatation thermique quasi identique à celui du 15-5PH.

En variante, le réducteur pourrait être du type « chaîne de vélo ».

Le système de positionnement comporte également des moyens d'indexage 18 de la position de la platine 2 par rapport au bâti, i.e. des moyens destinés à maintenir la platine dans un position donnée, à laquelle la platine a été amenée par l'ensemble moteur-réducteur. Les moyens d'indexage seront avantageusement sans jeu ou le cas échéant, ayant un jeu significativement inférieur à la précision de positionnement angulaire souhaitée.

Les moyens d'indexage 18 sont par exemple de type crabot.

Dans l'exemple représenté, ils comportent des dents fixes en rotation sur le bâti et des rainures fixes en rotation sur la platine, les dents coopérant avec les rainures. Les rainures sont délimitées par deux dents ayant le même profil que les dents fixes en rotation sur le bâti.

Dans l'exemple représenté, les moyens d'indexage comportent un plateau 20 portant sur une face des dents (non représentées) reparties en couronne et des dents (non représentées) réparties sur une couronne sur une face de la platine 2, en regard de la face du plateau 20 portant les dents. Dans l'exemple représenté, les dents solidaires de la platine sont réalisées sur une couronne 25 rapportée et fixée sur la platine, par exemple par le biais d'un assemblage vissé et/ou collé.

Les dents de la platine et du plateau ont le même profil de sorte que, lorsqu'elles sont en prise, les moyens d'indexage assurent une immobilisation sans jeu de la platine 2 par rapport au plateau 20.

Le plateau 20 est monté mobile en translation le long de l'axe X, de sorte à pouvoir se rapprocher de la platine 2 et permettre une mise en prise des dents du plateau et des dents de la couronne 25 , ou s'écarter de la platine pour désengager les dents du plateau de celles de la couronnes. Le dispositif comportent des moyens permettant le déplacement du plateau vers le long de l'axe X en éloignement et en rapprochement de la platine 2.

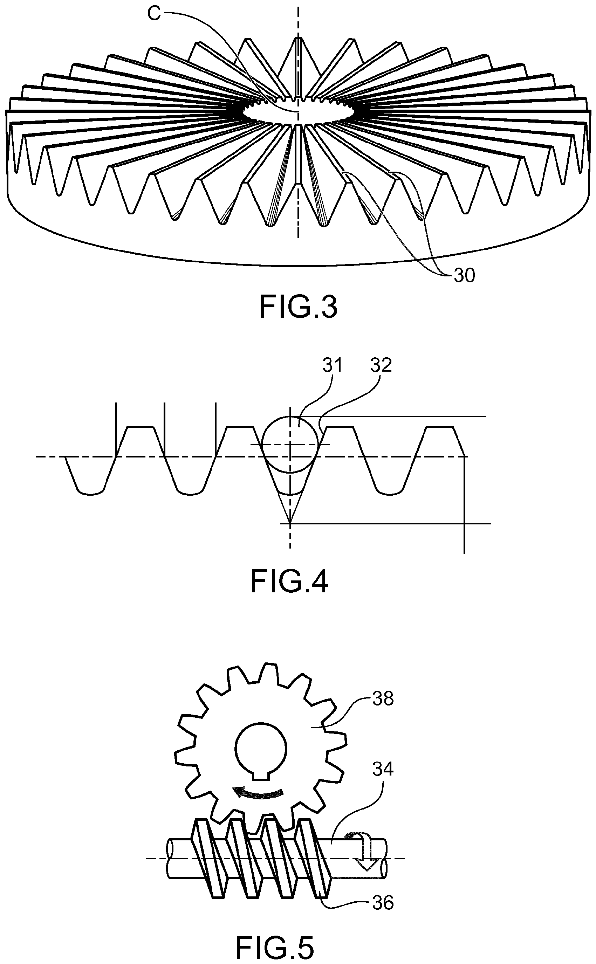

De manière préférée, les dents sont des dents de Hirth assurant un maintien sans jeu entre le plateau et la platine. Un exemple de dents de Hirth 30 est représenté sur la figure 3. Les dents de Hirth sont usinées radialement avec un point de convergence unique au centre C.

Par exemple, le plateau et la platine peuvent comporter 120 dents sur leur périphérie. Les dentures de Hirth sont « auto-centrantes » ce qui signifie que, lors de l'engagement des dents, puisque les dents sont fixes la couronne portant les dents va pivoter pour se centrer entre les dents. Le nombre de dents des moyens d'indexage fixe le nombre de positions possibles dans lesquelles la platine peut être maintenue en position pas les 120 dents de Hirth.

La valeur limite supérieure du jeu angulaire du réducteur est choisie en fonction de la géométrie des moyens d'indexage.

Par exemple, dans le cas d'un réducteur à denture de Hirth, le jeu sera au maximum de ¼ du pas angulaire des dentures.

En choisissant un moteur à 200 pas par tour et un réducteur 15/200 et un système d'indexage à 120 positions, i.e. une dent tous les 3°.

Le jeu angulaire du réducteur est au moins égal à 360/(200x200/15)=0,135°. Le jeu angulaire du réducteur est inférieur ou égal à ¼ × 3°=0,75°.
0,135° < j < 0,75°

De préférence, la couronne 25 est réalisée en un matériau présentant un coefficient de dilatation proche ou identique à celui de la platine 2, à laquelle elle est fixée. Par exemple, la couronne 25 est réalisée en acier inoxydable de type 15-5PH avec un traitement thermique H1025.

De préférence également, le plateau 20 est en un matériau présentant un coefficient de dilatation proche de celui de la couronne 25, par exemple il est réalisé avec un acier 17-7PH.

De manière avantageuse, on réalise la couronne et le plateau dans des alliages métalliques différents, par exemple dans des aciers inoxydables différents pour réduire le risque de « soudage à froid » (cold welding en terminologie anglo-saxonne) sous un vide poussé. De manière encore plus avantageuse, on recouvre les surfaces en contact avec une couche lubrifiante, par exemple une couche de bisulfure de molybdène pour réduire davantage les risques de « soudage à froid ».

Les exemples de matériaux donnés ci-dessus comme alternative au bisulfure de molybdène sont également applicables.

Les moyens permettant le déplacement du plateau le long de la direction X sont adaptés à un fonctionnement sur toute la gamme de température entre - 250°C et 70°C et à un fonctionnement dans le vide, par exemple le vide spatial. Les moyens permettant le déplacement du plateau ne mettent pas en œuvre de fluide gazeux ou liquide.

De manière très avantageuse, les moyens permettant le déplacement du plateau comportent un moyen déformable 26 élastiquement le long de l'axe X et disposé sous le plateau, de sorte à permettre au plateau de s'éloigner de la couronne 25 en se déplaçant le long de l'axe X et à le rappeler élastiquement en contact avec la couronne 25. Par exemple le moyen déformable est un soufflet. En outre des moyens 28 assurent le déplacement du plateau 20 le long de l'axe X. Avantageusement, il s'agit d'un électroaimant. Dans l'exemple représenté, l'électroaimant est fixé au bâti sous le plateau 20 à l'intérieur du soufflet 26. Le plateau 20 comporte au moins une partie en matériau ferromagnétique, de sorte que le plateau 20 soit attiré par l'électroaimant, lorsque l'électroaimant est activé.

Lorsque l'électroaimant est activé, le plateau 20 est déplacé le long de l'axe X en éloignement de la platine 2, les dents du plateau 20 s'écartant des dents de la couronne 25.

Lorsque l'électroaimant est désactivé, le plateau sous l'effet du rappel élastique du soufflet est déplacé le long de l'axe X vers la platine, les dents engageant les rainures.

De manière très avantageuse, le soufflet est un soufflet à coupelles métalliques soudées. D'une part, il présente une raideur axiale adaptée à l'application d'une force de rappel suffisante lorsque l'électroaimant est désactivé. D'autre part, un soufflet à coupelles métalliques soudées offre une raideur en torsion très élevée, ce qui assure un très bon maintien en rotation du plateau, et donc un très bon guidage axial du plateau. Un très bon maintien en rotation de la platine est assuré. Ainsi la position angulaire de la platine est fixée avec précision, lorsque les moyens d'indexage sont activés. Ces soufflets à coupelles soudées peuvent être réalisés par des fabricants tels que SENIOR FLEXONICS ou MEWASA.

Par exemple le soufflet est fixé au plateau et au bâti par des brides.

Dans un autre exemple, le déplacement du plateau 20 peut être obtenu par d'autres moyens électriques, par exemple par des moyens électromécaniques.

Dans un autre exemple de réalisation, on prévoit un électroaimant et le soufflet à coupelles métalliques soudées est remplacé par un ressort de rappel et des moyens de guidage du plateau le long de la direction longitudinale.

Dans un autre exemple, un vérin peut être mis en œuvre pour déplacer longitudinalement le plateau, par exemple un vérin à vis ou à actionneurs piézoélectriques.

Dans un autre exemple, on peut mettre en œuvre des matériaux à mémoire de forme assurant la fonction de guidage longitudinal et de déplacement longitudinal du plateau.

Le choix des moyens assurant le déplacement du plateau le long de l'axe X, des moyens de guidage et des moyens de rappel dépendent des conditions d'utilisation du système de positionnement.

A titre d'exemple, le soufflet à coupelles soudées est en acier inoxydable de type 304L/316L et possède une vingtaine d'ondes. Le soufflet offre une raideur axiale de l'ordre de quelques 10N/mm et une raideur en torsion de l'ordre de plusieurs 1000N.m/rad. Ce soufflet joue le rôle d'un ressort en forçant la couronne dentée stator 8 à s'engager dans la couronne dentée rotor.

Le choix du ou des matériaux utilisées se fait sur la base de plusieurs paramètres, tels que les propriétés physiques, par exemple et de manière non limitative : le module d'Young, la dureté, la limite élastique, la conduction thermique, la conduction électrique, les coefficients de frottement, l'amagnétisme, la résistance à la corrosion.

Par exemple, dans le cas d'une application à un satellite, la masse est un critère majeur, les matériaux légers tels les alliages d'aluminium ou de titane sont favorisés. Cependant la fiabilité est le critère prédominant. Par exemple, dans le cas des roulements à billes, ils ne peuvent être fabriqués en aluminium ou en titane, ces matériaux ne seraient pas capables de supporter les contraintes de vibration d'un décollage de fusée. Les roulements à billes sont donc réalisés en acier inoxydables malgré leur masse importante.

Tout ou partie des éléments du réducteur, de la platine du plateau et des moyens d'accouplement sont par exemple en acier inoxydables et/ou en acier et/ou en bronze et/ou en alliage à base de cuivre et/ou d'aluminium et ou de titane.

Le choix du ou des matériaux dépend entre autre des conditions d'utilisation.

Le fonctionnement du système de positionnement va maintenant être décrit.

Lorsque l'on souhaite déplacer l'objet fixé sur la platine 2, l'électroaimant est activé, ce qui provoque le déplacement du plateau le long de l'axe X vers l'électroaimant à l'encontre du soufflet, les dents portées par le plateau se désengagent des dents portées par la couronne 25. La platine n'est plus immobilisée en rotation par les moyens d'indexage.

Le moteur électrique est ensuite activé, celui-ci est piloté de sorte à tourner du nombre de pas souhaité en tenant compte du jeu du réducteur. La platine est alors mise en rotation via le réducteur. L'électroaimant est activé pendant l'activation du moteur électrique.

Le moteur est activé jusqu'à ce que la platine atteigne la position souhaitée, qui est l'une des 120 positions angulaires dans lesquelles la platine peut être maintenue en position par les moyens d'indexage. Lorsque la position souhaitée est atteinte, le moteur est désactivé. L'électroaimant est ensuite désactivé, le plateau est rappelé vers la couronne sous l'effet de la force de rappel exercée par le soufflet, les dents du plateau 20 engageant les dents de la couronne 25 et immobilisant la platine 2 dans la position atteinte par activation du moteur électrique. le positionnement final de la platine est obtenu et assuré par les dentures ; la platine va donc légèrement tourner pour se placer dans la position exacte où les dents de la platine seront en alignement parfait avec les rainures du plateau. Grâce à l'invention, l'amplitude de ce déplacement est très réduite, puisque grâce au moteur et à son réducteur, la platine a été « pré-positionnée » à sa position finale (l'une des 120 positions) à 1 pas moteur près, i.e. 0,13° dans l'exemple décrit. Ainsi, lorsque les dentures engagent l'une dans l'autre, le déplacement de la platine est inférieur à 0.13°, déplacement qui est inférieur ou égal au jeu du réducteur. Le moteur n'est donc pas du tout entrainé par le déplacement de la platine. La platine n'exerce pas de contre-réaction sur le moteur électrique via le réducteur.

La platine est alors maintenue dans la position angulaire souhaitée sans consommation d'électricité. Le système de positionnement selon l'invention présente une très bonne répétabilité de positionnement malgré la mise en œuvre d'un réducteur avec jeu.

Sur la figure 4, on eut voir un autre exemple de réalisation des moyens d'indexage pouvant être mis en œuvre dans le système de positionnement selon l'invention.

Les moyens d'indexage mettent en œuvre des billes 31 coopérant avec des rainures en V 32.

Par exemple, le plateau a la forme d'un disque et comporte trois alésages borgnes d'un diamètre d et d'une profondeur 0,6d, réalisés sur un cercle commun et répartis angulairement à 120° les uns des autres. Dans chacun de ces alésages est fixée une bille d'un diamètre d, par exemple par collage. Les billes sont alors en saillie de la surface du plateau d'une hauteur de 0,4d. La platine comporte, dans sa face en regard du plateau, des rainures radiales. Lorsque le plateau est repoussé contre la platine sous l'effet du soufflet, les trois billes se logent dans les trois rainures, immobilisant ainsi la position angulaire de la platine.

Sur la figure 5, on peut voir un autre exemple de réducteur avec jeu mettant en œuvre un dispositif à vis sans fin. Le jeu du réducteur correspond à l'amplitude angulaire avec laquelle la platine peut tourner sans contrainte sur le moteur.

Le dispositif comporte un cylindre 34 muni d'une cannelure hélicoïdale 36 et un pignon 38 coopérant avec la cannelure. Par exemple le cylindre 34 est en prise directe avec l'arbre du moteur électrique et le pignon 38 est porté par la platine.

Ce réducteur offre un rapport de réduction généralement élevé, par exemple supérieur à 100.

Dans l'exemple décrit en détail, le système permet un positionnement angulaire d'un objet fixé sur la platine.

Le système selon l'invention peut permettre un positionnement longitudinal.

Par exemple, le système comporte un moteur et un réducteur comprenant une vis hélicoïdale et une crémaillère. La crémaillère est fixée à la platine sur laquelle l'objet à déplacer est positionné.

La crémaillère est par exemple guidée par des glissières à billes.

Avantageusement, la crémaillère utilise une denture à profil trapézoïdal.

Le système d'indexage peut comporter un plateau dont l'extrémité est un trapèze de forme et de dimensions identiques à celui employé sur la crémaillère. Le plateau est attiré par un électroaimant et repoussé par un système élastique présentant une très grande raideur en torsion et une relative souplesse en compression.

Le système comporte également un électroaimant repoussant le plateau par un système élastique présentant une très grande raideur en torsion et une relative souplesse en compression.

Le système linéaire fonctionne de la manière suivante :
Le moteur entraine directement la vis hélicoïdale qui agit sur la crémaillère. La vis hélicoïdale présente un jeu par rapport à la crémaillère.
Le plateau des moyens d'indexage est attiré par l'électroaimant et repoussé par le système élastique.

Lorsque l'extrémité trapézoïdale du plateau est désengagée de la crémaillère, le mouvement est possible. Le moteur entraîne alors la vis hélicoïdale et fait avancer/reculer la platine par le biais de la crémaillère.

Lorsque le moteur a entrainé la platine à la position souhaitée, l'électroaimant est éteint et l'extrémité trapézoïdale du plateau vient immobiliser la crémaillère sous l'action de l'élément élastique. Du fait des formes identiques de la crémaillère et de l'extrémité trapézoïdale du plateau, aucun jeu ne subsiste entre ces deux pièces.

Grâce à l'invention, on obtient un système de positionnement offrant une grande précision pour positionner l'objet et assurant un maintien de l'objet dans la position. Ce système est apte à fonctionner à très basses températures. En effet, le système de positionnement ne dissipe aucune chaleur pour assurer l'indexage en position de la platine, celui-ci étant assuré par la coopération des dents du plateau et la couronne sous l'effet du moyen de rappel élastique.

Le système de positionnement selon l'invention peut être mis en œuvre dans tout dispositif nécessitant un positionnement précis d'un objet, pour des fonctionnements à température ambiante jusqu'à de très basses températures. Par exemple il peut être utilisé dans un télescope spatial.

## Revendications

1. Système de positionnement pouvant fonctionner par exemple sur l'intervalle de températures entre -250°C et 70°C, comportant un bâti (4) et une platine (2), ladite platine (2) étant montée mobile par rapport au bâti (4), ladite platine (2) étant apte à supporter un objet à positionner, des moyens de déplacement de la platine par rapport au bâti vers une position souhaitée, et un système d'indexage en position de la platine (2) par rapport au bâti, les moyens de déplacement comportant un moteur pas à pas (6) et un réducteur (8), ledit réducteur (8) présentant un jeu angulaire et le système d'indexage (18) comportant des moyens pour rendre inactif l'indexage en position de ladite platine (2) pendant le fonctionnement des moyens de déplacement, le jeu angulaire du réducteur étant choisi tel que la platine n'exerce pas de contre-réaction sur le moteur pas à pas via le réducteur lorsque les moyens pour rendre inactif l'indexage sont désactivés, dans lequel le jeu angulaire du réducteur (8) est supérieur à la résolution angulaire de l'ensemble moteur et réducteur.

2. Système de positionnement selon la revendication 1, dans lequel le réducteur (8) comporte des éléments de réduction s'engrenant directement.

3. Système de positionnement selon la revendication 1 ou 2, dans lequel le jeu angulaire du réducteur (8) est supérieur à 0,2°.

4. Système de positionnement selon l'une des revendications 1 à 3, dans lequel les moyens d'indexage en position (18) comportent des moyens d'accouplement à crabot répartis entre la platine (2) et un plateau (20), ledit plateau (20) étant configuré pour se rapprocher et s'éloigner de la platine (2) afin d'immobiliser en position ou libérer la platine respectivement, et des moyens assurant le déplacement en rapprochement ou en éloignement du plateau (20) par rapport à la platine (2).

5. Système de positionnement selon la revendication 4, dans lequel les moyens d'accouplement à crabot comportent des dentures de Hirth.

6. Système de positionnement selon la revendication 5, dans lequel la denture de Hirth du plateau est réalisée dans un premier matériau et la denture de Hirth de la platine est réalisée dans un deuxième matériau, les premier et deuxième matériaux présentant des coefficients de dilatation proches ou égaux.

7. Système de positionnement selon l'une des revendications 4 à 6, dans lequel les moyens assurant le déplacement en rapprochement ou en éloignement du plateau (20) par rapport (2) à la platine comportent un moyen de rappel élastique interposé ente le plateau et le bâti de sorte à exercer une force de rappel sur le plateau (20) en direction de la platine (2).

8. Système de positionnement selon la revendication 7, dans lequel le moyen de rappel élastique comporte un soufflet à coupelles métalliques (26) soudées assurant le rapprochement du plateau de la platine.

9. Système de positionnement selon l'un des revendications 4 à 8, dans lequel les moyens assurant le déplacement en rapprochement ou en éloignement du plateau (20) par rapport (2) à la platine comportent un électroaimant (28) assurant l'éloignement du plateau (20) par rapport à la platine (2).

10. Système de positionnement selon l'une des revendications 4 à 9, dans lequel tout ou partie des éléments du réducteur (8), de la platine (2), du plateau (20) et des moyens d'accouplement sont en acier inoxydable et/ou en acier et/ou en bronze et/ou en alliage à base de cuivre et/ou d'aluminium et ou de titane.

11. Système de positionnement selon l'une des revendications 1 à 10, dans lequel au moins les éléments mobiles les uns par rapport aux autres comportent un revêtement lubrifiant choisi avantageusement parmi du bisulfure de molybdène, du plomb, de l'argent, du nitrure de titane.

12. Système de positionnement selon l'une des revendications 1 à 11, dans lequel le réducteur (8) comporte des pignons (10, 14) à denture droite.

13. Système de positionnement selon l'une des revendications précédentes, dans lequel la platine (2) est mobile en rotation par rapport au châssis (4) autour d'un axe longitudinal (X).

14. Système de positionnement selon la revendication 13 en combinaison avec la revendication 4, dans lequel le réducteur comporte un pignon (10) en prise directe avec un arbre du moteur (6), une couronne dentée (16) fixée sur la platine (2) et engrenant le pignon (10) et dans lequel le plateau (20) des moyens d'indexage en position (18) est mobile en translation le long de l'axe longitudinal (X).

## Patentansprüche

1. Positioniersystem, das beispielsweise auf dem Temperaturintervall zwischen -250° C und 70° C arbeiten kann, umfassend einen Rahmen (4) und eine Platte (2), wobei die Platte (2) bezüglich des Rahmens (4) beweglich montiert ist, wobei die Platte (2) dazu ausgelegt ist, ein zu positionierendes Objekt zu tragen, Mittel zur Verlagerung der Platte bezüglich des Rahmens in Richtung einer gewünschten Position, und ein System zur Positionsindexierung der Platte (2) bezüglich des Rahmens, wobei die Verlagerungsmittel einen Schrittmotor (6) und ein Getriebe (8) umfassen, wobei das Getriebe (8) ein Winkelspiel aufweist, und das Indexierungssystem (18) Mittel zur Inaktivierung der Positionsindexierung der Platte (2) während des Arbeitens der Verlagerungsmittel umfasst, wobei das Winkelspiel des Getriebes derart gewählt ist, dass die Platte keine Gegenreaktion auf den Schrittmotor über das Getriebe ausübt, wenn die Mittel zur Inaktivierung der Indexierung deaktiviert sind, wobei das Winkelspiel des Getriebes (8) größer ist als die Winkelauflösung der Gesamtheit aus Motor und Getriebe.

2. Positioniersystem nach Anspruch 1, bei dem das Getriebe (8) Getriebeelemente umfasst, die direkt ineinander eingreifen.

3. Positioniersystem nach Anspruch 1 oder 2, bei dem das Winkelspiel des Getriebes (8) größer als 0,2° ist.

4. Positioniersystem nach einem der Ansprüche 1 bis 3, bei dem die Mittel (18) zur Positionsindexierung Klauenkopplungsmittel umfassen, die zwischen der Platte (2) und einem Teller (20) verteilt sind, wobei der Teller (20) dazu konfiguriert ist, sich der Platte (2) zu nähern und von ihr zu entfernen, um die Platte in der Position zu immobilisieren beziehungsweise freizugeben, sowie Mittel, die die Annäherungs- oder Entfernungsverlagerung des Tellers (20) bezüglich der Platte (2) gewährleisten.

5. Positioniersystem nach Anspruch 4, bei dem die Klauenkopplungsmittel Hirthverzahnungen umfassen.

6. Positioniersystem nach Anspruch 5, bei dem die Hirthverzahnung des Tellers aus einem ersten Material hergestellt ist, und die Hirthverzahnung der Platte aus einem zweiten Material hergestellt ist, wobei das erste und das zweite Material ähnliche oder gleiche Ausdehnungskoeffizienten aufweisen.

7. Positioniersystem nach einem der Ansprüche 4 bis 6, bei dem die Mittel, die die Annäherungs- oder Entfernungsverlagerung des Tellers (20) bezüglich der Platte (2) sicherstellen, ein elastisches Rückstellmittel umfassen, das zwischen dem Teller und dem Rahmen derart eingefügt ist, dass es eine Rückstellkraft auf den Teller (20) in Richtung der Platte (2) ausübt.

8. Positioniersystem nach Anspruch 7, bei dem das elastische Rückstellmittel einen Balg mit geschweißten Metallschalen (26) umfasst, der die Annäherung des Tellers an die Platte gewährleistet.

9. Positioniersystem nach einem der Ansprüche 4 bis 8, bei dem die Mittel, die die Annäherungs- oder Entfernungsverlagerung des Tellers (20) bezüglich der Platte (2) gewährleisten, einen Elektromagnet (28) umfassen, der das Entfernen des Tellers (20) bezüglich der Platte (2) gewährleistet.

10. Positioniersystem nach einem der Ansprüche 4 bis 9, bei dem alle oder ein Teil der Elemente des Getriebes (8), der Platte (2), des Tellers (20) und der Kopplungsmittel aus rostfreiem Stahl und/oder aus Stahl und/oder aus Bronze und/oder aus einer Legierung auf Basis von Kupfer und/oder aus Aluminium und/oder aus Titan sind.

11. Positioniersystem nach einem der Ansprüche 1 bis 10, bei dem zumindest die zueinander beweglichen Elemente eine Schmierbeschichtung umfassen, die vorzugsweise ausgewählt ist aus Molybdenbisulfid, Blei, Silber, Titannitrid.

12. Positioniersystem nach einem der Ansprüche 1 bis 11, bei dem das Getriebe (8) Ritzel (10, 14) mit gerader Verzahnung umfasst.

13. Positioniersystem nach einem der vorhergehenden Ansprüche, bei dem die Platte (2) bezüglich des Gestells (4) um eine Längsachse (X) drehbeweglich ist.

14. Positioniersystem nach Anspruch 13 in Kombination mit Anspruch 4, bei dem das Getriebe ein Ritzel (10) in direktem Eingriff mit einer Welle des Motors (6) umfasst, eine Zahnkrone (16), die an der Platte (2) befestigt ist und in Eingriff mit dem Ritzel (10) ist, und wobei der Teller (20) der Mittel zur Positionsindexierung (18) translationsbeweglich entlang der Längsachse (X) ist.

## Claims

1. A positioning system capable of operating for example over the temperature range between -250°C and 70°C, including a frame (4) and a plate (2), said plate (2) being movably mounted relative to the frame (4), said plate (2) being able to support an object to be positioned, means for displacing the plate relative to the frame to a desired position, and a system for position indexing the plate (2) relative to the frame, the displacement means including a stepper motor (6) and a reduction gear (8), said reduction gear (8) having an angular play and the indexing system (18) including means for rendering the position indexing of said plate (2) inactive during the operation of the displacement means, the angular play of the reduction gear being selected such that the plate does not exert a counter-reaction on the stepper motor via the reduction gear when the means for rendering the indexing inactive are deactivated, wherein the angular play of the reduction gear (8) is greater than the angular resolution of the motor and reduction gear assembly.

2. The positioning system according to claim 1, wherein the reduction gear (8) includes directly meshing reduction elements.

3. The positioning system according to claim 1 or 2, wherein the angular play of the reduction gear (8) is greater than 0.2°.

4. The positioning system according to one of claims 1 to 3, wherein the position indexing means (18) include dog coupling means distributed between the plate (2) and a tray (20), said tray (20) being configured to move towards and away from the plate (2) in order to immobilise in position or release the plate respectively, and means ensuring the displacement towards or away from the tray (20) relative to the plate (2).

5. The positioning system according to claim 4, wherein the dog coupling means comprise Hirth toothings.

6. The positioning system according to claim 5, wherein the Hirth toothing of the tray is made of a first material and the Hirth toothing of the plate is made of a second material, the first and second materials having close to or equal expansion coefficients.

7. The positioning system according to one of claims 4 to 6, wherein the means ensuring the displacement towards or away from the tray (20) relative (2) to the plate include elastic return means interposed between the tray and the frame so as to exert a return force on the tray (20) towards the plate (2).

8. The positioning system according to claim 7, wherein the elastic return means includes a bellows with welded metal cups (26) ensuring the approximation of the tray to the plate.

9. The positioning system according to one of claims 4 to 8, wherein the means ensuring the displacement towards or away from the tray (20) relative to the plate (2) include an electromagnet (28) ensuring the remoteness of the tray (20) relative to the plate (2).

10. The positioning system according to one of claims 4 to 9, wherein all or part of the elements of the reduction gear (8), the plate (2), the tray (20) and of the coupling means are made of stainless steel and/or steel and/or bronze and/or alloy based on copper and/or aluminium and/or titanium.

11. The positioning system according to one of claims 1 to 10, wherein at least the elements which are movable relative to each other include a lubricating coating advantageously selected from molybdenum disulphide, lead, silver, titanium nitride.

12. The positioning system according to one of claims 1 to 11, wherein the reduction gear (8) includes straight-toothed gear wheels (10, 14).

13. The positioning system according to one of the preceding claims, wherein the plate (2) is movable in rotation relative to the frame (4) about a longitudinal axis (X).

14. The positioning system according to claim 13 in combination with claim 4, wherein the reduction gear includes a gear wheel (10) in direct engagement with a motor shaft (6), a ring gear (16) fastened on the plate (2) and meshing the gear wheel (10) and wherein the tray (20) of the position indexing means (18) is movable in translation along the longitudinal axis (X).
